# EUROPEAN PATENT APPLICATION

(11) **EP 4 559 873 A1**
(43) Date of publication of application: **28.05.2025**
(21) Application number: 24209714.5
(22) Date of filing: 30.10.2024
(51) Int. Cl.: C01B 25/45, H01M 4/36, H01M 4/58, H01M 4/62, H01M 10/052

(54) **LITHIUM MANGANESE IRON PHOSPHATE MATERIAL, PREPARATION METHOD THEREOF, AND LITHIUM BATTERY**

(30) Priority: 21.11.2023 CN 202311569508; 06.03.2024 WO PCT/CN2024/080243
(71) Applicant: Eve Power Co., Ltd., Jingmen, Hubei 448000 (CN)
(72) Inventor: WU, Tingting, Jingmen, Hubei, 448000 (CN); LIU, Fanfen, Jingmen, Hubei, 448000 (CN); WEN, Shengyao, Jingmen, Hubei, 448000 (CN); GAO, Jianhang, Jingmen, Hubei, 448000 (CN); CHEN, Meng, Jingmen, Hubei, 448000 (CN)
(74) Representative: Murgitroyd & Company

(57) **Abstract**

Disclosed are a lithium manganese iron phosphate material, a preparation method thereof, and a lithium battery. The lithium manganese iron phosphate material includes a core and a coating layer on the core. A material of the core includes Li, M, and PO₄ in a non-stoichiometric ratio, M is Fe_{y}MnₓD_{z}, in which D is a metal. The coating layer includes a carbon material. The lithium manganese iron phosphate material has good structural stability, actual capacity per gram, and cycle life.

## Description

### TECHNICAL FIELD

The present disclosure relates to electrode materials, and more particularly, to a lithium manganese iron phosphate material, a preparation method thereof, and a lithium battery.

### BACKGROUND

With the development of portable electronic devices, electric vehicles and large-scale energy storage markets, the demand for lithium batteries continues to grow. The positive electrode sheet is one of critical components in the lithium battery, and positive electrode materials have an important influence on the performance of the lithium battery. Olivine-type positive electrode materials have advantages of high safety performance and low cost. Among them, both lithium manganese iron phosphate and lithium iron phosphate are the olivine-type positive electrode material. The lithium iron phosphate has high safety and cycle life, but it cannot meet the requirements of higher energy density due to its low voltage platform. Manganese, which has high voltage characteristic, imparts a higher voltage platform to lithium manganese iron phosphate, thereby obtaining a higher energy density than lithium iron phosphate. Furthermore, lithium manganese iron phosphate also has the characteristics of lithium iron phosphate, such as high safety, high cycle life, low cost, and environmental friendliness, and thus lithium manganese iron phosphate is one of the research hotspots of positive electrode materials of lithium batteries.

Although a lithium manganese iron phosphate material prepared by a high-temperature solid-phase synthesis method can be used as the electrode material of the lithium battery in the related art, with the widespread application of lithium battery, the market has put forward more requirements for the performance of the lithium battery, for example, rate and charge/discharge performance. Therefore, how to improve the actual capacity per gram and cycle life of the lithium manganese iron phosphate is of great significance.

### SUMMARY

The present disclosure provides a lithium manganese iron phosphate material, a preparation method of the lithium iron manganese phosphate material, and a lithium battery therefrom, which can solve the above defects, and improve the actual capacity per gram and cycle life of lithium manganese iron phosphate.

The present disclosure provides following technical solutions.

According to a first aspect, embodiments of the present disclosure provide a lithium manganese iron phosphate material comprising a core and a coating layer on the core;
a material of the core comprises Li, M and PO₄ in a non-stoichiometric ratio, in which M is Fe_{y}MnₓD_{z}, in which D is a metal except Fe or Mn, x, y and z represent a molar amount of Fe, Mn and the metal in the lithium manganese iron phosphate material, respectively, and a sum of molar amounts of Fe, Mn and the metal is A; and the coating layer comprises a carbon material;
in the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

In some embodiments of the present disclosure, in the lithium manganese iron phosphate material, the ratio of the molar amount of Li to A is 1.03 to 1.07, and/or the ratio of the molar amount of Li to the molar amount of PO₄ is 1.00 to 1.05, and/or the ratio of A to the molar amount of PO₄ is 0.95 to 1.10.

According to a second aspect, embodiments of the present disclosure provide a method for preparing a lithium manganese iron phosphate material, comprising the following steps:
providing a first slurry comprising a lithium source, a manganese source, an iron source, a phosphorus source, a carbon source, and a D source;
grinding the first slurry to obtain a second slurry;
subjecting the second slurry to spray drying to obtain a pre-sintered material; and
sintering the pre-sintered material under an atmosphere of a protective gas, and obtaining the lithium manganese iron phosphate material.

The prepared lithium manganese iron phosphate material comprises a core and a coating layer on the core; wherein a material of the core comprises Li, M and PO₄ in a non-stoichiometric ratio, in which M is Fe_{y}MnₓD_{z}, D is a metal except Fe or Mn, x, y and z represent a molar amount of Fe, Mn and the metal in the lithium manganese iron phosphate material, respectively, and a sum of molar amounts of Fe, Mn and the metal is A; the coating layer comprises a carbon material; and in the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

According to a third aspect, embodiments of the present disclosure provide a lithium battery including one or more battery cell units, wherein each of the battery cell units comprises a positive electrode sheet, a separator, and a negative electrode sheet, which are stacked in sequence. The positive electrode sheet comprises a positive current collector and a positive active material layer disposed on one or more surfaces of the positive current collector, and the positive active material layer includes a lithium manganese iron phosphate material.

The lithium manganese iron phosphate material comprises a core and a coating layer on the core; a material of the core comprises Li, M and PO₄ in a non-stoichiometric ratio, in which M is Fe_{y}MnₓD_{z}, in which D is a metal except Fe or Mn, x, y and z represent a molar amount of Fe, Mn and the metal in the lithium manganese iron phosphate material, respectively, and a sum of molar amounts of Fe, Mn and the metal is A; and the coating layer comprises a carbon material.

In the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

### Advantageous effects

According to the embodiments of the present disclosure, the core of the lithium manganese iron phosphate material has a molar ratio among Li, M and PO₄ such that the lithium manganese iron phosphate material has good structural stability, actual capacity per gram and cycle life. If the molar ratio of Li to A is lower than 1.01 (that is, a lower content of Li), the actual capacity per gram decreases. If the molar ratio of Li to A is greater than 1.10 (that is, a higher content of Li), the surface of the lithium manganese iron phosphate material may have an increased residual alkali content when infiltrated by water, and the high residual alkali content will lead to "swelling" of the lithium battery, resulting in a decrease in the cycle performance of the lithium battery.

### BRIEF DESCRIPTION OF THE DRAWINGS

FIG. 1 is a schematic view of a lithium battery according to some embodiments of the present disclosure.
FIG. 2 is a schematic view of a battery cell unit in a lithium battery according to some embodiments of the present disclosure.
FIG. 3 is a schematic view of a positive electrode sheet according to some embodiments of the present disclosure.
FIG. 4 shows X-ray diffraction analysis patterns of an iron elementary substance-removed material in step S1.5 of Example 1 according to some embodiments of the present disclosure.
FIG. 5 shows a scanning electron microscope picture of a lithium manganese iron phosphate material in Example 1 of the present disclosure.
FIG. 6 is a Raman spectrum of a lithium manganese iron phosphate material in Example 1 of the present disclosure.

### DETAILED DESCRIPTION OF THE EMBODIMENTS

Unless defined otherwise, all professional and scientific terms used herein have the same meaning as those familiar to a person skilled in the art. Materials or reagents used in the examples and comparative examples of the present disclosure are commercially available. In addition, any methods and materials similar or equivalent to those described herein can be applied to the present disclosure. The preferred embodiments/examples and materials described herein are exemplary only, but are not intended to limit the contents of the present disclosure.

It is to be noted that the order in which the following embodiments are described is not intended to limit the preferred order of the embodiments. Various embodiments of the present disclosure may be presented in a range format. It is to be understood that the description in range format is merely for convenience and brevity and should not be construed as an inflexible limitation on the scope of the disclosure. Accordingly, the description of a range should be considered to have specifically disclosed all the possible subranges as well as individual numerical values within the range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range. Whenever a numerical range is indicated herein, it is meant to include any cited numeral (fractional or integral numbers) within the indicated range.

In the description herein, the terms "comprises", "comprising", "includes", "including", "having" and their conjugates mean "including, but not limited to".

The terms such as "a plurality of" and "multiple" refer to two or more, for example, two, three, four, five, six, and the like.

The term "and/or" involves in a selection that includes any one of two or more related listed items, as well as a combination of any and all of related listed items, which includes a combination of any two related listed items, a combination of more than two related listed items, or a combination of all related listed items. For example, "A and/or B" includes three parallel schemes, A, B, and A + B. In another example, "A, and/or, B, and/or, C, and/or, D" includes technical schemes, for example, any one of A, B, C, and D (i.e., the technical solutions connected by a logic term, "OR"), and combinations of any and all of A, B, C, and D, including combinations of any two or any three of A, B, C, and D, as well as a combination of four of A, B, C, and D (i.e., the technical solutions connected by a logic term, "AND").

The term "solid content" refers to a ratio of the mass of solid substances in the slurry to the total mass of the slurry.

Embodiments of the present disclosure provide a lithium manganese iron phosphate material, which includes a core and a coating layer on the core. A material of the core includes Li, M, and PO₄ in a non-stoichiometric taion, wherein M is Fe_{y}MnₓD_{z}, D is a metal except Fe or Mn, x, y, and z represent molar amounts of Fe, Mn, and the metal in the lithium manganese iron phosphate material, respectively, and the sum of the molar amounts of Fe, Mn, and the metal is A. The coating layer includes a carbon material. In the lithium manganese iron phosphate material, a ratio of the molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

According to the embodiments of the present disclosure, there is a molar ratio among Li, M and PO₄ in the core of the lithium manganese iron phosphate material, so that the lithium manganese iron phosphate material has good structural stability, actual capacity per gram and cycle life. If the molar ratio of Li to A is lower than 1.01 (that is, a lower content of Li), the actual capacity per gram decreases. If the molar ratio of Li to A is greater than 1.10 (that is, a higher content of Li), the surface of the lithium manganese iron phosphate material may have an increased residual alkali content when infiltrated by water, and the high residual alkali content will lead to "swelling" of the lithium battery, resulting in a decrease in the cycle performance of the lithium battery.

In addition, the lithium manganese iron phosphate material includes the coating layer, and the coating layer includes a carbon material, so that an effective carbon coating can create a conductive network to provide a medium for electron transport, thereby improving electron transport efficiency. Moreover, it is possible to suppress the growth and "agglomeration" of the lithium manganese iron phosphate grains, to reduce the transmission distance of Li⁺ and improve the ionic conductivity. In addition, the coating layer has a protective effect on the core, which can alleviate or avoid a problem of Fe and Mn dissolution due to infiltration of the core by water (e.g., in electrolyte).

In the lithium manganese iron phosphate material, the ratio of the molar amount of Li to the molar amount of PO₄ is, for example, 0.95, 0.96, 0.97, 0.98, 0.99, 1.00, 1.10 or a value between any two of the foregoing values. The ratio of the molar amount of Li to A is, for example, 1.01, 1.02, 1.03, 1.04, 1.05, 1.06, 1.07, 1.08, 1.09, 1.10 or a value between any two of the foregoing values. The ratio of A to the molar amount of PO₄ is, for example, 0.90, 0.91, 0.92, 0.93, 0.94, 0.95, 0.96, 0.97, 0.98, 0.99, 1.00, 1.10, 1.11, 1.12, 1.13, 1.14, 1.15 or a value between any two of the foregoing values.

In order to further give consideration to improving the capacity per gram and cycle life of the lithium manganese iron phosphate material, in some embodiments of the present disclosure, the molar ratio of Li to A in the lithium manganese iron phosphate material is 1.03 to 1.07, and/or the molar ratio of Li to the molar ratio of PO₄ is 1.00 to 1.05, and/or A to the molar ratio of PO₄ is 0.95 to 1.10.

In order to improve the compactness of the lithium manganese iron phosphate material, in some embodiments of the present disclosure, a particle size D50 of the inner core is less than 10 µm, for example, less than 9 µm, less than 8 µm, less than 7 µm, less than 6 µm, less than 5 µm, less than 4 µm, less than 3 µm, less than 2 µm, or less than 1 µm.

In order to improve the coating uniformity of the coating layer and to alleviate or avoid the "agglomeration" of free carbon, in some embodiments of the present disclosure, the mass of the carbon material constitutes 0.5% to 3% of the total mass of the lithium manganese iron phosphate material, for example, 0.5%, 1%, 1.5%, 2%, 2.5%, 3% or a value between any two of the foregoing values.

In some embodiments of the present disclosure, a thickness of the coating layer is 3 nm to 5 nm, for example, 3 nm, 4 nm, 5 nm or a value between any two of the foregoing values.

It is to be noted that for the lithium manganese iron phosphate material according to the embodiments of the present disclosure, there is a strong absorption peak at 1330 cm⁻¹, corresponding to the D band of carbon (sp³ hybridized carbon), and also a strong absorption peak at 1590 cm⁻¹, corresponding to the G band of carbon (sp² hybridized carbon). The ratio of the D band to the G band is ID/IG, indicating the conductivity of the residual carbon. The smaller the value of ID/IG, the higher the content of the sp² hybridized carbon and the higher the conductivity of the carbon. Meanwhile, the larger the value of ID/IG, the higher the content of the sp³ hybridized carbon and the lower the conductivity of the carbon.

In order to further enhance the electron transport efficiency of the lithium manganese iron phosphate material, in some embodiments of the present disclosure, 0.50<ID/IG<0.95, and ID/IG may be, for example, 0.50, 0.55, 0.60, 0.65, 0.70, 0.75, 0.80, 0.85, 0.92, 0.94, or a value between any two of the foregoing values.

In order to further give consideration to improving the capacity per gram and cycle life of the lithium manganese iron phosphate material, in some embodiments of the present disclosure, D in M is selected from one or more of Mg, Ti, V, Ni, Co, Al, Nb, Nd, Y, Mo, Sr, La, Zr, B, and Ca; and/or, in M, 0.1<x<0.9, 0.1<y<0.5, and 0<z<0.5.

Embodiments of the present disclosure also provide a method for preparing the lithium manganese iron phosphate material, which can be used to prepare the lithium manganese iron phosphate material according to any one of the foregoing embodiments, including the following steps of:
S1. providing a first slurry comprising a lithium source, a manganese source, an iron source, a phosphorus source, a carbon source, and a D source;
S2. grinding the first slurry to obtain a second slurry;
S3. performing a spray drying treatment on the second slurry to obtain a pre-sintered material;
S4. sintering the pre-sintered material in an atmosphere of a protective gas to obtain the lithium manganese iron phosphate material having a coating layer, wherein the coating layer is made of a carbon material.

Specifically, in step S1, the D source includes a metal except Fe or Mn. The molar ratio of Li in the lithium source to the molar ratio of P in the phosphorus source is 0.95 to 1.10, for example, 0.95, 0.96, 0.97, 0.98, 0.99, 1.00, 1.10, or a value between any two of the foregoing values.

In step S1, each raw material can be selected according to conventional methods in the art. The lithium source may be one or more of lithium oxide, lithium hydroxide and a lithium salt. The lithium oxide includes, but is not limited to, Li₂O. Anions generated by ionization of the lithium salt include, but are not limited to, one or more of an oxalate ion, a carbonate ion, a sulfate ion, a nitrate ion, an acetate ion, a halogen ion, a phosphate ion, and a dihydrogen phosphate ion. Examples of the lithium salt are one or more of lithium carbonate, lithium sulfate, lithium nitrate, lithium acetate, lithium dihydrogen phosphate, lithium phosphate, and lithium oxalate.

The manganese source may be one or more of manganese oxide, manganese hydroxide, and a manganese salt. The manganese oxide includes, but is not limited to, one or more of manganese monoxide, manganese dioxide, and trimanganese tetroxide. Anions generated by ionization of the manganese salt include, but are not limited to, one or more of an oxalate ion, a carbonate ion, a sulfate ion, a nitrate ion, an acetate ion, a halogen ion, and a phosphate ion. Examples of the manganese source are by one or more of manganese carbonate, manganese phosphate, manganese oxalate, manganese nitrate, manganese acetate, manganese sulfate, and manganese chloride.

The iron source is one or more of iron oxide, iron hydroxide, and an iron salt. The iron oxide includes, but is not limited to, one or more of ferriferrous oxide, ferric oxide, and ferrous oxide. Anions generated by ionization of the iron salt include, but are not limited to, one or more of an oxalate ion, a carbonate ion, a sulfate ion, a nitrate ion, an acetate ion, a halogen ion, and a phosphate ion. Examples of the iron salt are, for example, one or more of ferrous sulfate, ferric chloride, ferrous phosphate, ferric phosphate, ferrous pyrophosphate, ferric pyrophosphate, ferric nitrate, ferric acetate, ferric citrate, ferrous oxalate, and ferrous chloride.

The phosphorus source includes, but is not limited to, one or more of phosphoric acid and a phosphorus-containing metal salt. The phosphorus-containing metal salt includes, but is not limited to, one or more of ammonium phosphate, ammonium dihydrogen phosphate, potassium dihydrogen phosphate, sodium dihydrogen phosphate, and ferric phosphate.

The carbon source may be one or more of an inorganic carbon source and an organic carbon source. The inorganic carbon source includes, but is not limited to, one or more of graphene, carbon nanotubes, and graphite. The organic carbon source includes, but is not limited to, one or more of glucose, sucrose, lactose, starch, organic acids, vitamins, and phenolic resins. The carbon source is in an amount such that the mass of the carbon material in the prepared lithium manganese iron phosphate material constitutes 0.5% to 3% by mass based on the total mass of the lithium manganese iron phosphate material, and/or the thickness of the coating layer is 3 nm to 5 nm. The carbon source may act as a reducing agent to effectively alleviate or avoid oxidation of Mn²⁺ and Fe²⁺ in the sintering treatment.

The D source is, for example, a compound comprising one or more of Mg, Ti, V, Ni, Co, Al, Nb, Nd, Y, Mo, Sr, La, Zr, B, and Ca. The compound may be an oxide, a hydroxide, or a metal salt. Taking the D source as a titanium source for example, the titanium source may be one or more of titanium oxide, metatitanic acid, tetrabutyl titanate, titanium hydroxide, and a titanium salt. The titanium oxide includes, but is not limited to, TiO₂. Anions generated by ionization of the titanium salt include, but are not limited to, one or more of an oxalate ion, a carbonate ion, a sulfate ion, a nitrate ion, an acetate ion, a halogen ion, and a phosphate ion. Examples of the titanium salt are one or more of titanium sulfate, titanium nitrate, and titanium chloride. Taking the D source as a cobalt source for example, the cobalt source includes, but is not limited to, one or more of tricobalt tetraoxide, cobalt nitrate, cobaltous oxide, cobalt acetate, and cobalt phosphate. Taking the D source as a nickel source for example, the nickel source includes, but is not limited to, one or more of nickel protoxide, nickel oxide, nickel nitrate, nickel acetate, and nickel phosphate. Taking the D source as a magnesium source for example, the magnesium source includes, but is not limited to, one or more of magnesium oxide, magnesium chloride, magnesium sulfate, magnesium nitrate, and magnesium acetate. Taking the D source as a zinc source for example, the zinc source includes, but is not limited to, one or more of zinc oxide, zinc nitrate, zinc sulfate, zinc chloride, and zinc acetate. Taking the D source as a vanadium source for example, the vanadium source includes, but is not limited to, one or more of vanadous oxide, vanadium pentoxide, vanadium trioxide, vanadium nitrate, and vanadium acetate. Taking the D source as a niobium source for example, the niobium source includes, but is not limited to, one or more of niobium pentaoxide, niobium hydroxide, niobium oxalate, niobium acetate, and niobium nitrate.

In step S1, the solvent of the first slurry may be, for example, water and/or an organic solvent. For water, deionized water is preferred. Useful organic solvent includes, but is not limited to, alcohols having 1 to 10 carbon atoms, for example, one or more of methanol, ethanol, n-propanol, 2-propanol, n-butanol, 2-methyl-2-propanol, n-pentanol, 2-methyl-1-butanol, and 2,2-dimethyl-1-propanol. The solvent of the first slurry is preferably water because of the advantages of water, for example, low cost, environment-friendly, low requirements for equipment and high safety, compared to organic solvents.

In some embodiments of the present disclosure, the solid content of the first slurry is 10% to 40% by mass, for example, 5%, 10%, 15%, 20%, 25%, 30%, 35%, 40% or a value between any two of the foregoing values, so that the first slurry has a suitable viscosity for subsequent grinding treatment.

In step S2, the purpose of the grinding treatment is to refine the raw material and improve the uniformity for the subsequent spray drying and the sintering treatment, so as to facilitate the control of the particle size of grains during growth in the sintering treatment. Methods of grinding treatment include, but are not limited to, one or more of sanding, ball milling, mechanical agitation milling, and airflow milling. The condition of the grinding treatment may refer to conventional conditions used in the art. For example, the grinding treatment is conducted by a sanding process for 1 h to 6 h at a rotation speed of 200 r/min to 1,000 r/min.

In step S3, the condition of the spray drying treatment may refer to conventional conditions used in the art.

In step S4, the purpose of the sintering treatment is to generate lithium manganese iron phosphate by a solid state reaction of all raw materials. In some embodiments of the present disclosure, the protective gas is selected from one or more of nitrogen gas, argon gas, helium gas, neon gas, krypton gas, and xenon gas. The sintering treatment may be conducted in a muffle furnace, a tubular furnace, a rotary furnace, a roller kiln or a pusher kiln.

The condition of the sintering treatment is one of critical factors to affect ID/IG. In order to further improve the electron transport efficiency of the lithium manganese iron phosphate material, in some embodiments of the present disclosure, 0.50<ID/IG<0.95. The condition of the sintering treatment may be determined according to the range of ID/IG, for example, at a temperature of 600°C to 800°C and for 4 h to 8 h.

In order to obtain a lithium manganese iron phosphate material having a specific particle size, in some embodiments of the present disclosure, the method for preparing the lithium manganese iron phosphate material further includes, after the step of the sintering treatment and before the step of obtaining the lithium manganese iron phosphate material, pulverizing the sintered material obtained after the sintering treatment, and then screening the pulverized material through a mesh sieve of 150 mesh to 200 mesh to obtain the lithium manganese iron phosphate material.

Embodiments of the present disclosure further provide an electrode sheet including the lithium manganese iron phosphate material as described in any one of the foregoing embodiments, or the lithium manganese iron phosphate material prepared by the preparation method as described in any one of the foregoing embodiments.

Embodiments of the present disclosure also provide a lithium battery including, but not limited to, a button battery, a pouch battery, a prismatic lithium battery, and a cylindrical lithium battery. The lithium battery includes a positive electrode sheet. The positive electrode sheet includes a positive current collector and a positive active material layer disposed on a surface of the positive current collector. The positive active material layer includes the lithium manganese iron phosphate material as described in any one of the foregoing embodiments, or the lithium manganese iron phosphate material prepared by the preparation method as described in any one of the foregoing embodiments.

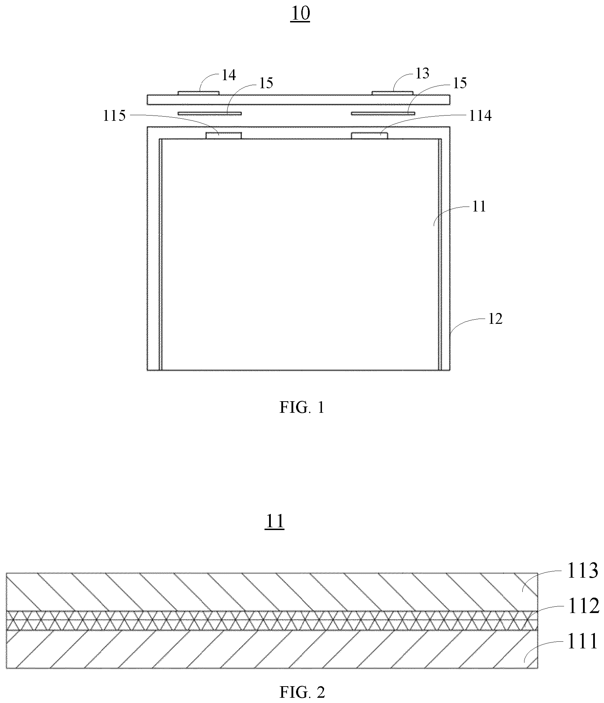

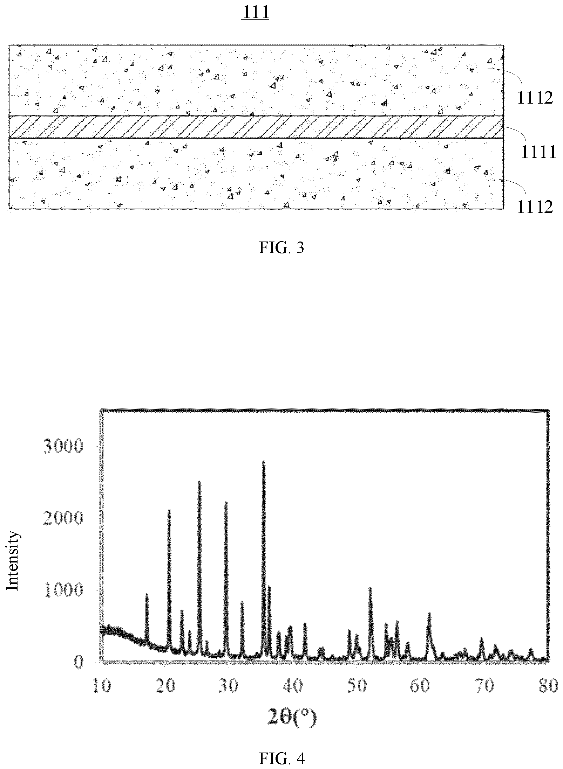

Taking the lithium battery as a prismatic lithium battery for example, as shown in FIGs. 1 and 2, the lithium battery 10 includes one or more battery cell units 11. Each of the battery cell units 11 includes a positive electrode sheet 111, a separator 112, and a negative electrode sheet 113, which are stacked in sequence. As shown in FIG. 3, the positive electrode sheet 111 includes a positive current collector 1111 and positive active material layers 1112 disposed on surfaces of the positive current collector 1111. The positive active material layers 1112 include the lithium manganese iron phosphate material as described in any one of the foregoing embodiments, or the lithium manganese iron phosphate material as prepared by the preparation method as described in any one of the foregoing embodiments.

The positive active material layer further comprises a positive electrode adhesive and a positive electrode conductive agent. The positive current collector, the positive electrode adhesive, and the positive electrode conductive agent may each be made of conventional materials in the related art. For example, the material of the positive current collector includes, but is not limited to, aluminum foils or composite aluminum foils. The positive electrode adhesive includes, but is not limited to, one or more of vinylidene fluoride/hexafluoropropylene copolymers, polyvinylidene fluoride, polyacrylonitrile, polymethyl methacrylate, and polytetrafluoroethylene. The positive electrode conductive agent includes, but is not limited to, one or more of carbon black, graphite, and graphene.

A method for preparing the positive electrode sheet, for example, includes the steps of mixing the lithium manganese iron phosphate material, the positive electrode conductive agent, the positive electrode adhesive, and a first solvent to obtain a first mixture; coating the first mixture on the positive current collector; and then performing sequentially drying and rolling to obtain the positive electrode sheet. It is to be noted that the first mixture may be cast on a separate carrier to form a film layer, and then the film layer is separated from the carrier and stacked to the surface(s) of the positive current collector. The first solvent includes, but is not limited to, N-methylpyrrolidone, dimethylformamide, or ethylene glycol dimethyl ether.

The negative electrode sheet includes a negative current collector and a negative active material layer disposed on a surface of the negative current collector. The negative active material layer includes a negative active material, a negative electrode adhesive, and a negative electrode conductive agent. The negative current collector, the negative active material, the negative electrode adhesive, and the negative electrode conductive agent may each be made of conventional materials in the art. For example, the material of the negative current collector includes, but is not limited to, a copper foil, a composite copper foil, or a copper mesh. The negative active material includes, but is not limited to, one or more of a lithium elementary substance, a lithium-alloyable metal, a semi-metal, a transition metal oxide, a non-transition metal oxide, and a carbon material. The lithium-alloyable metal or the semi-metal includes, but is not limited to, Si, Sn, Al, Ge, Pb, Bi, Sb, a Si-Yi alloy (Y₁ is an alkali metal, an alkaline earth metal, an element of Group 13 to 16, a transition metal, a rare earth element, or a combination thereof, except Si), and a Sn-Y₂ alloy (Y₂ is an alkali metal, an alkaline earth metal, an element of Group 13 to 16, a transition metal, a rare earth element, or a combination thereof, except Sn). The transition metal oxide includes, but is not limited to, one or more of a lithium titanium oxide, a vanadium oxide, a lithium vanadium oxide, and a titanium niobium oxide. The non-transition metal oxide includes, but is not limited to, one or more of SnO₂ and SiOx (0<x<2). The carbon material includes, but is not limited to, one or more of crystalline carbon (e.g., graphite) and amorphous carbon. The negative electrode adhesive is a water-based adhesive or may be the same as the positive electrode adhesive. The negative electrode conductive agent may be the same as the positive electrode conductive agent. The preparation method of the negative electrode sheet can be conducted according to the preparation method of the positive electrode sheet.

A material of the separator includes, but is not limited to, one or more of glass fibers, polyesters, Teflon, polyethylene, polypropylene, and polytetrafluoroethylene.

It is to be noted that the lithium battery according to the embodiments of the present disclosure may also include other conventional structural components. For example, the lithium battery according to the embodiments of the present disclosure further includes an electrolyte in which the battery cell is immersed. The electrolyte includes a lithium salt and an organic solvent. The organic solvent includes, but is not limited to, a combination of two or more of ethylene carbonate, propylene carbonate, dimethyl carbonate, diethyl carbonate, ethyl methyl carbonate, propylene sulfite, ethyl acetate, diethyl sulfite, and 1,3-propanesultone. The lithium salt includes, but is not limited to, one or more of LiPF₆, LiClO₄, LiBF₄, LiSbF₆, LiAsF₆, LiCF₃SO₃, Li(CF₃SO₂)₂N, LiC₄F₉SO₃, LiAlO₂, LiAlCl₄, LiODFB, LiTFSI, LiFSI, LiCl, LiI and LiN(CₓF₂ₓ₊₁SO₂)(C_{y}F_{2y+1}SO₂), wherein x and y are independently integers from 1 to 20. The mass of the lithium salt is, for example, 10% to 15% of the total mass of the electrolyte. As another example, with continued reference to FIG. 1, the lithium battery 1 further includes a housing 12, a positive post 13, and a negative post 14. The housing 12 is made of, for example, aluminum. The battery cell units 11 are disposed within the housing 12. A positive tab 114 of the battery cell unit 11 and the positive post 13 are integrally welded by a connecting piece 15 to form the positive electrode of the lithium battery 10. A negative tab 115 of the battery cell unit 11 and the negative post 14 are integrally welded by the connecting piece 15 to form the negative electrode of the lithium battery 10.

The technical solutions and the technical effect of the present disclosure will be described in detail below by means of examples, comparative examples and experimental examples. The following examples are merely a part of the embodiments of the present disclosure and are not intended to specifically limit the present disclosure.

### Example 1

This example provides a lithium manganese iron phosphate material and a preparation method thereof. The lithium manganese iron phosphate material includes a core and a coating layer on the core. A material of the core is Li_{0.96}Fe_{0.3}Mn_{0.6}V_{0.04}PO₄. The coating layer includes a carbon material. The mass of the carbon material is 1.5% of the total mass of the lithium manganese iron phosphate material. The thickness of the coating layer is 3 nm. The ratio ID/IG of the D band to the G band of the carbon material is 0.8.

The method for preparing the lithium manganese iron phosphate material includes the following steps.
S1.1. 45.76 kg of trimanganese tetroxide, 45.25 kg of ferric phosphate, 35.46 kg of lithium carbonate, 3 kg of vanadium trioxide, 80.68 kg of an aqueous phosphoric acid solution with a mass percentage of 85%, and 2.72 kg of glucose were added to a mixer to mix the raw materials for 2 h to obtain a mixed material. Then, the mixed material was transferred to a sand mill, and deionized water was added to the mixed material in a mass ratio of the mixed material to the deionized water of 1: 1.5, thereby obtaining a first slurry.
S1.2. The first slurry was subjected to a sanding process at a rotation speed of 500 r/min for 1.5 h to obtain a second slurry.
S1.3. The second slurry was subjected to a spray drying treatment, while keeping the second slurry stirring throughout the spray drying treatment to obtain a pre-sintered material having a particle size of 2 µm to 5 µm.
S1.4. The pre-sintered material was placed in a kiln, and a protective gas N₂ was introduced therein in a flow rate of 80 mL/min. Then, the pre-sintered material was heated from room temperature to 750°C at a heating rate of 5°C/min, sintered at 750°C for 6 h, and cooled to room temperature to obtain a sintered material.
S1.5. The sintered material was sequentially subjected to an airflow pulverizing treatment and a screening treatment using a 150 mesh sieve. The material passing through the 150 mesh sieve was conducted the removal of iron elementary substance. The iron elementary substance-removed material was subjected to an X-ray diffraction (XRD) analysis. and XRD analysis pattern is shown in FIG. 4, which proves that the material obtained through the element iron removal process is lithium manganese iron phosphate material.

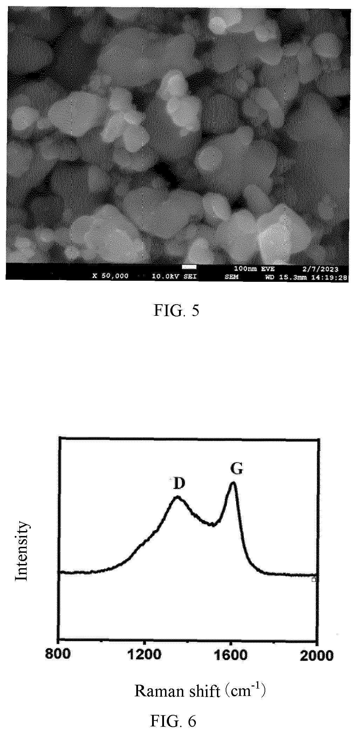

The obtained lithium manganese iron phosphate material was observed by a scanning electron microscope (SEM). As shown in FIG. 5, the lithium manganese iron phosphate material has a good morphology. FIG. 6 shows a Raman spectrum of the obtained lithium manganese iron phosphate material, indicating that the lithium manganese iron phosphate material has a strong absorption peak at 1330 cm⁻¹ corresponding to the D band of carbon (sp³ hybridized carbon), and also has a strong absorption peak at 1590 cm⁻¹ corresponding to the G band of carbon (sp² hybridized carbon).

### Example 2

This example provides a lithium manganese iron phosphate material and a preparation method thereof. The lithium manganese iron phosphate material in the present example is the same as that in Example 1, except that the material of the core is Li_{0.97}Fe_{0.3}Mn_{0.6}V_{0.04}PO₄.

The method for preparing the lithium manganese iron phosphate material in the present example is the same as that in Example 1, except that 35.46 kg of lithium carbonate in step S1.1 is replaced with 35.83 kg of lithium carbonate.

### Example 3

This example provides a lithium manganese iron phosphate material and a preparation method thereof. The lithium manganese iron phosphate material in the present example is the same as that in Example 1, except that the material of the core is Li_{0.99}Fe_{0.3}Mn_{0.6}V_{0.04}PO₄.

The method for preparing the lithium manganese iron phosphate material in the present example is the same as that in Example 1, except that 35.46 kg of lithium carbonate in step S1.1 is replaced with 36.57 kg of lithium carbonate.

### Example 4

This example provides a lithium manganese iron phosphate material and a preparation method thereof. The lithium manganese iron phosphate material in the present example is the same as that in Example 1, except that the material of the core is Li_{1.01}Fe_{0.3}Mn_{0.6}V_{0.04}PO₄.

The method for preparing the lithium manganese iron phosphate material in the present example is the same as that in Example 1, except that 35.46 kg of lithium carbonate in step S1.1 is replaced with 37.31 kg of lithium carbonate.

### Example 5

This example provides a lithium manganese iron phosphate material and a preparation method thereof. The lithium manganese iron phosphate material in the present example is the same as that in Example 1, except that the material of the core is Li_{1.03}Fe_{0.3}Mn_{0.6}V_{0.04}PO₄.

The method for preparing the lithium manganese iron phosphate material in the present example is the same as that in Example 1, except that 35.46 kg of lithium carbonate in step S1.1 is replaced with 38.05 kg of lithium carbonate.

### Example 6

This example provides a lithium manganese iron phosphate material and a preparation method thereof. The lithium manganese iron phosphate material in the present example is the same as that in Example 1, except that the material of the core is Li_{0.95}Fe_{0.3}Mn_{0.6}V_{0.04}PO₄.

The method for preparing the lithium manganese iron phosphate material in the present example is the same as that in Example 1, except that 35.46 kg of lithium carbonate in step S1.1 is replaced with 35.09 kg of lithium carbonate.

### Example 7

This example provides a lithium manganese iron phosphate material and a preparation method thereof. The lithium manganese iron phosphate material in the present example is the same as that in Example 1, except that the material of the core is LiFe_{0.35}Mn_{0.6}V_{0.02}PO₄.

The method for preparing the lithium manganese iron phosphate material in the present example is the same as that in Example 1, except that the step S1.1 in Example 1 is replaced with the following steps in which: 45.76 kg of trimanganese tetroxide, 52.79 kg of ferric phosphate, 36.94 kg of lithium carbonate, 1.50 kg of vanadium trioxide, 74.92 kg of an aqueous phosphoric acid solution with a mass percentage of 85%, and 2.72 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Example 8

This example provides a lithium manganese iron phosphate material and a preparation method thereof. The lithium manganese iron phosphate material in the present example is the same as that in Example 1, except that the material of the core is Li_{1.03}Fe_{0.35}Mn_{0.6}V_{0.05}PO₄.

The method for preparing the lithium manganese iron phosphate material in the present example is the same as that in Example 1, except that the step S1.1 in Example 1 is replaced with the following steps in which: 45.76 kg of trimanganese tetroxide, 52.79 kg of ferric phosphate, 38.05 kg of lithium carbonate, 3.74 kg of vanadium trioxide, 74.92 kg of an aqueous phosphoric acid solution with a mass percentage of 85%, and 2.72 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Example 9

This example provides a lithium manganese iron phosphate material and a preparation method thereof. The lithium manganese iron phosphate material in the present example is the same as that in Example 1, except that the material of the core is Li_{1.04}Fe_{0.35}Mn_{0.64}V_{0.02}PO₄.

The method for preparing the lithium manganese iron phosphate material in the present example is the same as that in Example 1, except that the step S1.1 in Example 1 is replaced with the following steps in which: 48.81 kg of trimanganese tetroxide, 52.79 kg of ferric phosphate, 38.42 kg of lithium carbonate, 1.50 kg of vanadium trioxide, 74.92 kg of an aqueous phosphoric acid solution with a mass percentage of 85%, and 2.72 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Example 10

This example provides a lithium manganese iron phosphate material and a preparation method thereof. The lithium manganese iron phosphate material in the present example is the same as that in Example 1, except that the mass of the carbon material constitutes 0.5% of the total mass of the lithium manganese iron phosphate material.

The method for preparing the lithium manganese iron phosphate material in the present example is the same as that in Example 1, except that 2.72 kg of glucose in step S1.1 is replaced with 0.91 kg of glucose.

### Example 11

This example provides a lithium manganese iron phosphate material and a preparation method thereof. The lithium manganese iron phosphate material in the present example is the same as that in Example 1, except that the mass of the carbon material constitutes 2% of the total mass of the lithium manganese iron phosphate material.

The method for preparing the lithium manganese iron phosphate material in the present example is the same as that in Example 1, except that 2.72 kg of glucose in step S1.1 is replaced with 3.63 kg of glucose.

### Example 12

This example provides a lithium manganese iron phosphate material and a preparation method thereof. The lithium manganese iron phosphate material in the present example is the same as that in Example 1, except that the mass of the carbon material constitutes 3% of the total mass of the lithium manganese iron phosphate material.

The method for preparing the lithium manganese iron phosphate material in the present example is the same as that in Example 1, except that 2.72 kg of glucose in step S1.1 is replaced with 5.44 kg of glucose.

### Example 13

This example provides a lithium manganese iron phosphate material and a preparation method thereof. The lithium manganese iron phosphate material in the present example is the same as that in Example 1, except that the ratio ID/IG of the D band to the G band of the carbon material is 0.7.

The method for preparing the lithium manganese iron phosphate material in the present example is the same as that in Example 1, except that the step S1.4 in Example 1 is replaced with the following steps in which: the pre-sintered material was placed in a kiln, a protective gas N₂ was introduced in a flow rate of 80 mL/min, and then the pre-sintered material was heated from room temperature to 750°C at a heating rate of 5°C/min, sintered at 750°C for 8 h, and cooled to room temperature to obtain a sintered material.

### Example 14

This example provides a lithium manganese iron phosphate material and a preparation method thereof. The lithium manganese iron phosphate material in the present example is the same as that in Example 1, except that the ratio ID/IG of the D band to the G band of the carbon material is 0.95.

The method for preparing the lithium manganese iron phosphate material in the present example is the same as that in Example 1, except that the step S1.4 in Example 1 is replaced with the following steps in which: the pre-sintered material was placed in a kiln, a protective gas N₂ was introduced in a flow rate of 80 mL/min, and then the pre-sintered material was heated from room temperature to 750°C at a heating rate of 5°C/min, sintered at 750°C for 5 h, and cooled to room temperature to obtain a sintered material.

### Example 15

This example provides a lithium manganese iron phosphate material and a preparation method thereof. The lithium manganese iron phosphate material in the present example is the same as that in Example 1, except that the material of the core is Li_{1.04}Fe_{0.32}Mn_{0.64}Ti_{0.04}PO₄.

The method for preparing the lithium manganese iron phosphate material in the present example is the same as that in Example 1, except that the step S1.1 in Example 1 is replaced with the following steps in which: 48.81 kg of trimanganese tetroxide, 48.26 kg of ferric phosphate, 38.42 kg of lithium carbonate, 3.19 kg of titanium dioxide, 78.38 kg of an aqueous phosphoric acid solution with a mass percentage of 85%, and 2.77 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Example 16

This example provides a lithium manganese iron phosphate material and a preparation method thereof. The lithium manganese iron phosphate material in the present example is the same as that in Example 1, except that the material of the core is Li_{1.03}Fe_{0.32}Mn_{0.62}Nb_{0.04}PO₄.

The method for preparing the lithium manganese iron phosphate material in the present example is the same as that in Example 1, except that the step S1.1 in Example 1 is replaced with the following steps in which: 47.29 kg of trimanganese tetroxide, 48.26 kg of ferric phosphate, 38.05 kg of lithium carbonate, 5.32 kg of niobium pentoxide, 78.38 kg of an aqueous phosphoric acid solution with a mass percentage of 85%, and 2.78 kg of glucose were added to a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Example 17

This example provides a lithium manganese iron phosphate material and a preparation method thereof. The lithium manganese iron phosphate material in the present example is the same as that in Example 1, except that the material of the core is Li_{1.01}Fe_{0.32}Mn_{0.6}Y_{0.04}PO₄.

The method for preparing the lithium manganese iron phosphate material in the present example is the same as that in Example 1, except that the step S1.1 in Example 1 is replaced with the following steps in which: 45.76 kg of trimanganese tetroxide, 48.26 kg of ferric phosphate, 37.31 kg of lithium carbonate, 4.52 kg of yttrium oxide, 78.38 kg of an aqueous phosphoric acid solution with a mass percentage of 85%, and 2.77 kg of glucose were added into a mixer to mix the raw materials for 2 h to obtain a mixed material, and then the mixed material was transferred to a sand mill, and deionized water was added to the mixed material in a mass ratio of the mixed material to the deionized water of 1: 1.5 to obtain a first slurry.

### Example 18

This example provides a lithium manganese iron phosphate material and a preparation method thereof. The lithium manganese iron phosphate material in the present example is the same as that in Example 1, except that the material of the core is Li_{1.02}Fe_{0.32}Mn_{0.62}Zr_{0.04}PO₄.

The method for preparing the lithium manganese iron phosphate material in the present example is the same as that in Example 1, except that the step S1.1 in Example 1 is replaced with the following steps in which: 47.29 kg of trimanganese tetroxide, 48.26 kg of ferric phosphate, 37.68 kg of lithium carbonate, 4.93 kg of zirconium dioxide, 78.38 kg of an aqueous phosphoric acid solution with a mass percentage of 85%, and 2.78 kg of glucose were added into a mixer to mix the raw materials for 2 h to obtain a mixed material, and then the mixed material was transferred to a sand mill, and deionized water was added to the mixed material in a mass ratio of the mixed material to the deionized water of 1: 1.5 to obtain a first slurry.

### Comparative Example 1

This comparative example provides a lithium manganese iron phosphate material and a preparation method thereof. The lithium manganese iron phosphate material in the present comparative example is the same as that in Example 1, except that the material of the core is LiFe_{0.32}Mn_{0.64}V_{0.04}PO₄.

The method for preparing the lithium manganese iron phosphate material in the present comparative example is the same as that in Example 1, except that the step S1.1 in Example 1 is replaced by with the following steps in which: 48.81 kg of trimanganese tetroxide, 48.26 kg of ferric phosphate, 36.94 kg of lithium carbonate, 3 kg of vanadium trioxide, 78.38 kg of an aqueous phosphoric acid solution with a mass percentage of 85%, and 2.77 kg of glucose were added into a mixer to mix the raw materials for 2 h to obtain a mixed material, and then the mixed material was transferred to a sand mill, and deionized water was added to the mixed material in a mass ratio of the mixed material to the deionized water of 1: 1.5 to obtain a first slurry.

### Comparative Example 2

This comparative example provides a lithium manganese iron phosphate material and a preparation method thereof. The lithium manganese iron phosphate material in the present comparative example is the same as that in Example 1, except that the material of the core is LiFe_{0.32}Mn_{0.61}Ti_{0.04}PO₄.

The method for preparing the lithium manganese iron phosphate material in the present example is the same as that in Example 1, except that the step S1.1 in Example 1 is replaced with the following steps in which: 48.81 kg of trimanganese tetroxide, 48.26 kg of ferric phosphate, 36.94 kg of lithium carbonate, 3.19 kg of titanium dioxide, 78.38 kg of an aqueous phosphoric acid solution with a mass percentage of 85%, and 2.76 kg of glucose were added into a mixer to mix the raw materials for 2 h to obtain a mixed material, and then the mixed material was transferred to a sand mill, and deionized water was added to the mixed material in a mass ratio of the mixed material to the deionized water of 1: 1.5 to obtain a first slurry.

### Comparative Example 3

This comparative example provides a lithium manganese iron phosphate material and a preparation method thereof. The lithium manganese iron phosphate material in the present comparative example is the same as that in Example 1, except that the material of the core is LiFe_{0.32}Mn_{0.64}Nb_{0.04}PO₄.

The method for preparing the lithium manganese iron phosphate material in the present comparative example is the same as that in Example 1, except that the step S1.1 in Example 1 is replaced with the following steps in which: 48.81 kg of trimanganese tetroxide, 48.26 kg of ferric phosphate, 36.94 kg of lithium carbonate, 5.32 kg of niobium pentoxide, 78.38 kg of an aqueous phosphoric acid solution with a mass percentage of 85%, and 2.80 kg of glucose were added into a mixer to mix the raw materials for 2 h to obtain a mixed material, and then the mixed material was transferred to a sand mill, and deionized water was added to the mixed material in a mass ratio of the mixed material to the deionized water of 1: 1.5 to obtain a first slurry.

### Comparative Example 4

This comparative example provides a lithium manganese iron phosphate material and a preparation method thereof. The lithium manganese iron phosphate material in the present comparative example is the same as that in Example 1, except that the material of the core was LiFe_{0.23}Mn_{0.64}Y_{0.04}PO₄.

The method for preparing the lithium manganese iron phosphate material in the present comparative example is the same as that in Example 1, except that the step S1.1 in Example 1 is replaced with the following steps in which: 48.81 kg of trimanganese tetroxide, 48.26 kg of ferric phosphate, 36.94 kg of lithium carbonate, 4.52 kg of yttrium oxide, 78.38 kg of an aqueous phosphoric acid solution with a mass percentage of 85%, and 2.80 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Comparative Example 5

This comparative example provides a lithium manganese iron phosphate material and a preparation method thereof. The lithium manganese iron phosphate material in the present comparative example is the same as that in Example 1, except that the material of the core is LiFe_{0.32}Mn_{0.64}Zr_{0.04}PO₄.

The method for preparing the lithium manganese iron phosphate material in the present comparative example is the same as that in Example 1, except that the step S1.1 in Example 1 is replaced with the following steps in which: 48.81 kg of trimanganese tetroxide, 48.26 kg of ferric phosphate, 36.94 kg of lithium carbonate, 4.93 kg of zirconium dioxide, 78.38 kg of an aqueous phosphoric acid solution with a mass percentage of 85%, and 2.80 kg of glucose were added into a mixer to mix the raw materials for 2 h to obtain a mixed material, and then the mixed material was transferred to a sand mill and deionized water was added to the mixed material in a mass ratio of the mixed material to the deionized water of 1: 1.5 to obtain a first slurry.

### Experimental Example

The lithium manganese iron phosphate materials of Examples 1 to 18, Comparative Examples 1 to 5 were used to prepare button batteries to test the electrochemical performances, comprising the following steps:
S100. mixing uniformly the lithium manganese iron phosphate material, Super P (conductive carbon black), polyvinylidene fluoride (as a binder) in a mass ratio of 90: 5: 5 to obtain a mixture;
S200. adding an appropriate amount of N-methylpyrrolidone to the mixture obtained in step S100, and then placing the mixture in a vacuum ball mill for 2 h at a rotation speed of 600 r/min to obtain a slurry;
S300. coating the slurry obtained in step S200 to one or more surfaces of an aluminum foil current collector having a thickness of 0.020 mm by a coating machine, and then subjecting the slurry to vacuum drying at 110°C for 12 h to obtain an electrode sheet;
S400. assembling the electrode sheet obtained in step S300 as a positive electrode sheet, a metal lithium sheet as a counter electrode, a Celgard2400 porous polypropylene (PP) membrane as a separator, and 1 mol/L of LiPF₆ solution (in a mixed solvent of polycarbonate (PC) and dimethyl carbonate (DMC) in a volume ratio of 1: 1) as an electrolyte, into an CR2032-type button battery in a glove box;
S500. detecting the first discharge capacity per gram of the CR2032-type button battery at room temperature of 25°C with a rate of 0.2C; and, detecting the capacity retention rate of the CR2032-type button battery at a temperature of 45°C with a rate of 1C in a charge-discharge cycle of 100 cycles.

The test results are shown in Table 1 below:

**Table 1. Test results for the button batteries**

| No. : | First discharge capacity with a rate of 0.2C (mAh/g) | Capacity retention rate with a rate of 1C in a charge-discharge cycle of 100 cycles (%) |
|---|---|---|
| Example 1 | 143.2 | 98.7 |
| Example 2 | 143.9 | 98.3 |
| Example 3 | 143.8 | 98.0 |
| Example 4 | 145.2 | 97.9 |
| Example 5 | 145.9 | 97.8 |
| Example 6 | 143.5 | 98.6 |
| Example 7 | 146.9 | 99.2 |
| Example 8 | 146.4 | 99.3 |
| Example 9 | 143.6 | 98.2 |
| Example 10 | 142.8 | 98.4 |
| Example 11 | 143.2 | 98.3 |
| Example 12 | 143.1 | 98.3 |
| Example 13 | 145.2 | 98.8 |
| Example 14 | 142.0 | 98.1 |
| Example 15 | 143.8 | 98.4 |
| Example 16 | 144.2 | 98.3 |
| Example 17 | 145.6 | 97.9 |
| Example 18 | 142.4 | 99.1 |
| Comparative Example 1 | 138.7 | 97.2 |
| Comparative Example 2 | 139.1 | 96.8 |
| Comparative Example 3 | 141.2 | 96.5 |
| Comparative Example 4 | 140.9 | 95.8 |
| Comparative Example 5 | 138.4 | 96.7 |

As can be seen from Table 1, the electrochemical performance of the lithium manganese iron phosphate materials in Examples 1 to 12 is significantly superior to that of the lithium manganese iron phosphate material in Comparative Example 1. The electrochemical performance of the lithium manganese iron phosphate material in Example 15 is significantly superior to that of the lithium manganese iron phosphate material in Comparative Example 2. The electrochemical performance of the lithium manganese iron phosphate material in Example 16 is significantly superior to that of the lithium manganese iron phosphate material in Comparative Example 3. The electrochemical performance of the lithium manganese iron phosphate material in Example 17 is significantly superior to that of the lithium manganese iron phosphate material in Comparative Example 4. The electrochemical performance of the lithium manganese iron phosphate material in Example 18 is significantly superior to that of the lithium manganese iron phosphate material in Comparative Example 5. The test results illustrate that the specific molar ratio between Li, M and PO₄ in the core allows the lithium manganese iron phosphate material to have good capacity per gram and cycle life. If the ratio of the molar amount of Li to A is lower than 1.01 (i.e., a lower content of Li), the capacity per gram decreases. If the ratio of the molar amount of Li to A is greater than 1.10 (i.e., a higher content of Li), the surface of the lithium manganese iron phosphate material may have an increased residual alkali content when infiltrated by water, so that the alkaline group(s) may attack the surface group(s) of the polyvinylidene fluoride during the pulping process, and cause the polyvinylidene fluoride to undergo a bimolecular elimination reaction, which increases the number of conjugated bonds and leads to an increase in the viscosity of the slurry. Furthermore, when the residual alkali amount is too high, the side reaction between the positive electrode sheet and the electrolyte is increased, which easily leads to "swelling" of the lithium battery, resulting in a decrease in the cycle performance of the lithium battery.

After 100 cycles, an inductively coupled plasma (ICP) method was used to detect the dissolution amount of Mn and Fe in the electrolyte of the button battery including the lithium manganese iron phosphate material in Example 1, the button battery including the lithium manganese iron phosphate material in Example 10, the button battery including the lithium manganese iron phosphate material in Example 11, and the button battery including the lithium manganese iron phosphate material in Example 12, respectively, and the detection results are shown in the following Table 2:

**Table 2. Dissolution amount of Mn and Fe in electrolyte of button battery**

| No.: | Sum of dissolution amounts of Mn and Fe (ppm) |
|---|---|
| Example 1 | 156 |
| Example 10 | 826 |
| Example 11 | 235 |
| Example 12 | 581 |

As can be seen from Table 2, after 100 cycles, the electrolyte of the button battery having the lithium manganese iron phosphate material in Example 1 has the minimum dissolution amounts of Mn and Fe. Since the lithium manganese iron phosphate material in Example 10 has a lower content of the carbon material, the coating of the core by the coating layer is of lower uniformity and a part of the core surface may be exposed. The exposed surface is in direct contact with the electrolyte, leading to a high dissolution amount of Mn and Fe. In addition, nonuniformity coating of the core by the coating layer may have an effect on the production of a complete conductive network, thereby lowering the electrochemical performance of the lithium manganese iron phosphate material. The lithium manganese iron phosphate materials in Examples 11 and 12 have a relatively high content of the carbon material, which increases the specific surface area of the lithium manganese iron phosphate material, and causes the presence of "agglomeration" of the lithium manganese iron phosphate material, affecting processing performance of the lithium manganese iron phosphate material solution and forming gel or uneven coating. When free carbon has an increased content, it may agglomerate, and the coating of the core by the coating layer nay be incomplete, causing the dissolution amount of Mn and Fe to be relatively high.

## Claims

1. A lithium manganese iron phosphate material comprising a core and a coating layer on the core;
wherein a material of the core comprises Li, M and PO₄ in a non-stoichiometric ratio, in which M is Fe_{y}MnₓD_{z}, D is a metal except Fe or Mn, x, y and z represent a molar amount of Fe, Mn and the metal in the lithium manganese iron phosphate material, respectively, and a sum of molar amounts of Fe, Mn and the metal is A; and the coating layer comprises a carbon material;
in the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

2. The lithium manganese iron phosphate material according to claim 1, wherein, in the lithium manganese iron phosphate material, at least one of the following is satisfied:
the ratio of the molar amount of Li to A is 1.03 to 1.07,
the ratio of the molar amount of Li to the molar amount of PO₄ is 1.00 to 1.05, and
the ratio of A to the molar amount of PO₄ is 0.95 to 1.10.

3. The lithium manganese iron phosphate material according to claim 1 or 2, wherein a particle size D50 of the core is less than 10 µm.

4. The lithium manganese iron phosphate material according to any one of claims 1 to 3, wherein at least one of the following is satisfied:
a mass of the carbon material constitutes 0.5% to 3% of a total mass of the lithium manganese iron phosphate material; and
a thickness of the coating layer is 3 nm to 5 nm.

5. The lithium manganese iron phosphate material according to claim 4, wherein a ratio of a D band to a G band of the carbon material is ID/IG, and 0.50<ID/IG<0.95.

6. The lithium manganese iron phosphate material according to any one of claims 1 to 5, wherein, at least one of the following is satisfied:
in M, D is selected from one or more of Mg, Ti, V, Ni, Co, Al, Nb, Nd, Y, Mo, Sr, La, Zr, B, and Ca; and
in M, 0.1<x<0.9, 0.1<y<0.5, and 0<z<0.5.

7. A method for preparing a lithium manganese iron phosphate material, comprising the following steps:
providing a first slurry comprising a lithium source, a manganese source, an iron source, a phosphorus source, a carbon source, and a D source;
grinding the first slurry to obtain a second slurry;
subjecting the second slurry to spray drying to obtain a pre-sintered material; and
sintering the pre-sintered material under an atmosphere of a protective gas, and
obtaining the lithium manganese iron phosphate material;
wherein the obtained lithium manganese iron phosphate material comprises a core and a coating layer on the core; a material of the core comprises Li, M and PO₄ in a non-stoichiometric ratio, in which M is Fe_{y}MnₓD_{z}, in which D is a metal except Fe or Mn, x, y and z represent a molar amount of Fe, Mn and the metal in the lithium manganese iron phosphate material, respectively, and a sum of molar amounts of Fe, Mn and the metal is A; the coating layer comprises a carbon material; and in the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

8. The method according to claim 7, wherein at least one of the following is satisfied:
the sintering step is conducted at a temperature of 600°C to 800°C for 4 h to 8 h;
the method for preparing the lithium manganese iron phosphate material further comprises, after the sintering step and before the step of obtaining the lithium manganese iron phosphate material, pulverizing the sintered material, and then screening the pulverized material through a mesh sieve of 150 mesh to 200 mesh to obtain the lithium manganese iron phosphate material; and
the protective gas is selected from one or more of nitrogen gas, argon gas, helium gas, neon gas, krypton gas, and xenon gas.

9. The method according to claim 7 or 8, wherein, in the lithium manganese iron phosphate material, at least one of the following is satisfied:
the ratio of the molar amount of Li to A is 1.03 to 1.07,
the ratio of the molar amount of Li to the molar amount of PO₄ is 1.00 to 1.05, and
the ratio of A to the molar amount of PO₄ is 0.95 to 1.10.

10. The method according to any one of claims 7 to 9, wherein a particle size D50 of the core is less than 10 µm.

11. The method according to any one of claims 7 to 10, wherein at least one of the following is satisfied:
a mass of the carbon material constitutes 0.5% to 3% of a total mass of the lithium manganese iron phosphate material; and
a thickness of the coating layer is 3 nm to 5 nm.

12. The method according to any one of claims 7 to 11, wherein at least one of the following is satisfied:
a ratio of a D band to a G band of the carbon material is ID/IG, satisfying 0.50< ID/IG< 0.95;
in M, D is selected from one or more of Mg, Ti, V, Ni, Co, Al, Nb, Nd, Y, Mo, Sr, La, Zr, B, and Ca; and
in M, 0.1<x<0.9, 0.1<y<0.5, 0<z<0.5.

13. A lithium battery comprising one or more battery cell units, wherein each of the battery cell units comprises a positive electrode sheet, a separator, and a negative electrode sheet, which are stacked in sequence, the positive electrode sheet comprises a positive current collector and a positive active material layer disposed on one or more surfaces of the positive current collector, and the positive active material layer comprises a lithium manganese iron phosphate material;
the lithium manganese iron phosphate material comprises a core and a coating layer on the core; a material of the core comprises Li, M and PO₄ in a non-stoichiometric ratio, in which M is Fe_{y}MnₓD_{z}, D is a metal except Fe or Mn, in which x, y and z represent a molar amount of Fe, Mn and the metal in the lithium manganese iron phosphate material, respectively, and a sum of molar amounts of Fe, Mn and the metal is A; and the coating layer comprises a carbon material;
in the lithium manganese iron phosphate material, a ratio of a molar amount of Li to A is 1.01 to 1.10, a ratio of the molar amount of Li to a molar amount of PO₄ is 0.95 to 1.10, and a ratio of A to the molar amount of PO₄ is 0.90 to 1.15.

14. The lithium battery according to claim 13, wherein, in the lithium manganese iron phosphate material, at least one of the following is satisfied:
the ratio of the molar amount of Li to A is 1.03 to 1.07,
the ratio of the molar amount of Li to the molar amount of PO₄ is 1.00 to 1.05, and
the ratio of A to the molar amount of PO₄ is 0.95 to 1.10.

15. The lithium battery according to claim 13 or 14, wherein at least one of the following is satisfied:
a particle size D50 of the core is less than 10 µm;
a mass of the carbon material constitutes 0.5% to 3% of a total mass of the lithium manganese iron phosphate material;
a thickness of the coating layer is 3 nm to 5 nm;
a ratio of a D band to a G band of the carbon material is ID/IG, and 0.50<ID/IG<0.95;
in M, D is selected from one or more of Mg, Ti, V, Ni, Co, Al, Nb, Nd, Y, Mo, Sr, La, Zr, B, and Ca; and
in M, 0.1<x<0.9, 0.1<y<0.5, and 0<z<0.5.
